# EUROPÄISCHE PATENTSCHRIFT

(11) **EP 0 619 491 B1**
(45) Veröffentlichungstag und Bekanntmachung des Hinweises auf die Patenterteilung: **01.07.1998**
(21) Anmeldenummer: 93105733.5
(22) Anmeldetag: 07.04.1993
(51) Int. Cl.: G01N 31/16

(54) **Kombinierte Titriervorrichtung**
Combined titration apparatus
Appareil combiné de titration

(43) Veröffentlichungstag der Anmeldung: 12.10.1994
(73) Patentinhaber: Deutsche METROHM Gesellschaft mit beschränkter Haftung & Co. elektronische Messgeräte, 70772 Filderstadt (DE)
(72) Erfinder:
(74) Vertreter: Gleiss, Alf-Olav, Dr.jur. Dipl.-Ing.

(56) Entgegenhaltungen:
- CH-A- 534 877
- DE-U- 9 003 629
- FR-A- 1 554 684
- FR-A- 2 354 562

## Beschreibung

Die Erfindung betrifft eine volumetrisch beziehungsweise coulometrisch arbeitende Titriervorrichtung.

Titriervorrichtungen sind auf den verschiedensten Gebieten für die chemische Bestimmung einer oder mehrerer Substanzen in Proben einsetzbar. In der allgemeinen Chemie, Petrochemie, im Lebensmittelbereich, der Pharmazie, der Medizin sowie auf dem Wasser- und Abwassersektor usw. läßt sich mittels Titration die Menge einer gesuchten Substanz bestimmen. Dazu erfolgt eine genaue Dosierung eines Reagenzes mit bekanntem Wirkstoffgehalt, das in bekanntem Verhältnis mit dem gesuchten Stoff reagiert. Die Menge des benötigten Reagenzes bis zu einem bestimmten Endpunkt, der üblicherweise mit einer Indikator-Elektrode erkannt wird, ist ein Maß für die Menge des zu bestimmenden Stoffes. Die Zugabe des bestimmten Reagenzes kann auf zwei unterschiedliche Arten erfolgen, entweder volumetrisch oder coulometrisc. Bei der volumetrischen Methode (DE-U-9 003 629.8, FR-A-1 554 684) wird das Reagenz uber eine sehr genau steuerbaren Kolben/Zylinder-Einheit (Dosiereinheit) dem Titriergefäß als zugemessenes Volumen zugeführt. Bei der coulometrischen Methode (FR-A-1 554 684) wird das Reagenz elektrolytisch in einem Titriergefäß erzeugt. Hierzu werden Generator-Elektroden eingesetzt, die in den Inhalt des Titriergefäßes eintauchen. Mittels eines genau gemessenen, an die Elektroden angelegten Stroms wird im Titriergefäßinhalt auf elektrochemischem Wege das Reagenz in definierter Menge erzeugt, das dann mit der gesuchten Substanz reagiert. Die Strom-Zeit-Fläche ist ein Maß für die Menge des zugegebenen Reagenzes und damit der zu bestimmenden Substanz.

Wie erwähnt, arbeiten die bekannten Titriergeräte entweder nach der volumetrischen oder der coulometrischen Methode, d. h., soll ein Methodenwechsel erfolgen, so ist es erforderlich, den entsprechend anderen Titriergerätetyp einzusetzen. Die Anschaffung der beiden Geräte führt zu hohen Kosten.

Bekannt ist ferner eine Titriervorrichtung der eingangs genannten Art, mit der eine beigestellte coulometrische Titrierzelle betreibbar ist. Als Zusatz kann ein Beistellgerät zugeordnet werden, welches nach der volumetrischen Methode arbeitet (Mitsubishi Karl Fischer Moisture Meter Model CA-06).

Der Erfindung liegt die Aufgabe zugrunde, eine Titriervorrichtung der eingangs genannten Art zu schaffen, die besonders vielseitig anwendbar ist, kostengünstig angeschafft und eingesetzt werden kann sowie einen einfachen Aufbau besitzt.

Diese Aufgabe wird erfindungsgemäß durch ein Grundgerät gelöst, das eine Steuer- und Betätigungseinrichtung für die volumetrische Reagenzzumessung aufweist, wobei für eine volumetrische Titration eine Dosiereinheit am Grundgerät abnehmbar befestigt ist, die mechanische Kupplungselemente zum Anschluß an die Betätigungseinrichtung aufweist, und wobei zusätzlich zu der volumetrischen Dosiereinheit für eine coulometrische Titration eine coulometrische Titrierzelle direkt oder mittels einer Adaptereinheit unter Verwendung derselben Steuereinrichtung am Grundgerät anordbar oder anschließbar ist. Aufgrund dieser Ausgestaltung ergibt sich eine coulometrische Dosiereinheit sowie der Vorteil, daß das Grundgerät bereits alle Komponenten für eine volumetrische Titration aufweist, insbesondere ist die Betätigungseinrichtung für die volumetrische Dosierung des Reagenzes im Grundgerät vorhanden. Zusätzliche Komponenten, wie zum Beispiel die genannte Betätigungseinrichtung für die Kolben/Zylinder-Einheit, müssen der erfindungsgemäßen Titriervorrichtung nicht separat zugeordnet werden, wie dies im Stand der Technik der Fall ist. Das vorhandene erfindungsgemäße Grundgerät bietet somit auf engstem Raum eine Komplettlösung, die auch für eine coulometrische Messung geeignet ist, wobei für die Stromzumessung bei der coulometrischen Methode dieselbe Steuereinrichtung des Grundgerätes eingesetzt wird, die -im Falle einer volumetrischen Messung- auch die Betätigungseinrichtung für die Kolben/Zylinder-Einheit ansteuert. Die coulometrische Adaptereinheit wird als Beistellgerät ausgebildet, z.B. integriert in einen Rührer zum Rühren des Inhalts des Titriergefäßes, wobei das Beistellgerät an eine entsprechende Schnittstelleneinrichtung des Grundgerätes angeschlossen werden kann. Ferner ist es möglich, daß die coulometrische Dosiereinheit im Grundgerät integriert ist. Aufgrund der sich bei entsprechender Ausgestaltung ergebenden Möglichkeit, nicht nur die volumetrische Dosiereinheit, sondern nun auch die coulometrische Dosiereinheit am Grundgerät anbauen oder vom Grundgerät abnehmen zu können, ist auch die coulometrische Dosiereinheit als Wechseleinheit ausgeführt. Damit sind coulometrische und volumetrische Wechseleinheiten -für den jeweiligen Einsatzzweck- auf einfache Weise auszutauschen. Die Wechseleinheiten erlauben einen Dosiermethodenwechsel und/oder können sich zum Beispiel hinsichtlich ihrer maximalen Reagenz-Zumessungsmenge unterscheiden.

Es kann also -wie bereits erwähnt- vorgesehen sein, die volumetrische Dosiereinheit und die coulometrische Dosiereinheit als Wechseleinheiten auszubilden.

Für eine sehr einfache Handhabung weist das Grundgerät Anschlüsse für mechanische und/oder elektrische Verbindungswege auf, die beim Zuordnen der volumetrischen Dosiereinheit und der coulometrischen Adaptereinheit vorzugsweise selbsttätig mit Gegenanschlüssen der entsprechenden Titriereinheit(en) -Dosier-/Adaptereinheit(en)- verbunden werden. Bei einer selbsttätigen Kopplung der Anschlüsse mit den Gegenanschlüssen ist es hinreichend, lediglich die gewünschte Titriereinheit am Grundgerät zu befestigen. Weitere Handgriffe sind insoweit dann nicht erforderlich.

Wie bereits erwähnt, lassen sich nahezu alle Baugruppen sowie die verwendete Software des rechnergestützt arbeitenden Grundgeräts sowohl für die volumetrische als auch für die coulometrische Bestimmungsmethode benutzen. Vorzugsweise erzeugt die Steuereinrichtung der Dosierung dienende elektrische Steuerimpulse für die Reagenz-Zumessung, wobei diese Steuerimpulse sowohl der Ansteuerung der Betätigungseinrichtung für die volumetrische Dosiereinheit (Kolben/Zylinder-Einheit), als auch der Ansteuerung der coulometrischen Adaptereinheit/Dosiereinheit dienen. Nach einem bevorzugten Ausführungsbeispiel der Erfindung ist vorgesehen, daß die Steuerimpulse einen Stromgenerator der coulometrischen Adaptereinheit ansteuern und daß die coulometrische Adaptereinheit eine Schnittstelleneinrichtung zum Anschluß von elektrischen Verbindungen zur coulometrischen Titrierzelle aufweist. Dieser Stromgenerator liefert den den in der coulometrischen Titrierzelle befindlichen Elektroden zuzuführenden Strom. Der Stromgenerator kann sich alternativ auch im Grundgerät befinden.

Nach einem weiteren Ausführungsbeispiel ist vorgesehen, daß -wie bereits erwähnt- der Stromgenerator für die coulometrische Dosiereinheit/Titriereinheit im Grundgerät angeordnet ist und daß das Grundgerät eine Schnittstellenvorrichtung zum Anschluß der elektrischen Verbindungen zur coulometrischen Titrierzelle aufweist. Durch die Anordnung des Stromgenerators im Grundgerät besteht unter anderem der Vorteil, daß gleichzeitig beide Titrierzellen für die volumetrische und die coulometrische Methode aufgebaut werden können. Der Platzbedarf dafür ist äußerst gering.

Nach einem bevorzugten Ausführungsbeispiel weist die volumetrische Dosiereinheit für die Reagenz-Dosierung die genannte Kolben/Zylinder-Einheit auf, deren Kolben mittels der Betätigungseinrichtung angetrieben wird. Diese Betätigungseinrichtung befindet sich im Grundgerät; sie wird bei der Zuordnung der volumetrischen Dosiereinheit mit dem Kolben der Kolben/Zylinder-Einheit selbsttätig gekuppelt. Hierfür sind mechanische Kupplungselemente vorgesehen, die die erwähnten Verbindungswege bilden. Die Zahl der abgegebenen Steuerimpulse der Steuereinrichtung bzw. das Integral der Pulsinformation (Stromdauer) stellt ein Maß für die zugeführte Reagenzmenge und damit für die zu bestimmende Substanz dar. Bei der volumetrischen Methode entspricht dies der Zuführung der entsprechenden Reagenzmenge durch Betätigung der Kolben/Zylinder-Einheit; bei der coulometrischen Methode wird die erforderliche Reagenzmenge durch den von den Steuerimpulsen ausgelösten Strom auf elektrolytischem Wege erzeugt.

Die Zeichnungen veranschaulichen die Erfindung anhand von Ausführungsbeispielen, und zwar zeigt:
- Fig. 1: eine Titriervorrichtung, auf deren Grundgerät nur eine volumetrische Dosiereinheit angeordnet ist und die daher nicht von den Ansprüchen umfaßt wird, und ein beigestelltes Titriergefäß,
- Fig. 2: das Grundgerät der Fig. 1, jedoch mit einer aufgesetzten coulometrischen Adaptereinheit und beigestellter Titrierzelle, das ebenfalls nicht von den Ansprüchen umfaßt wird,
- Fig. 3: das erfindungsgemäße Grundgerät mit integrierter coulometrischer Einrichtung sowie mit beigestellter coulometrischer Titrierzelle, aber noch ohne volumetrische Dosiereinrichtung
- Fig. 4: einen Längsschnitt durch das Grundgerät in schematischer Darstellung und
- Fig. 5: eine Frontansicht des Grundgeräts.

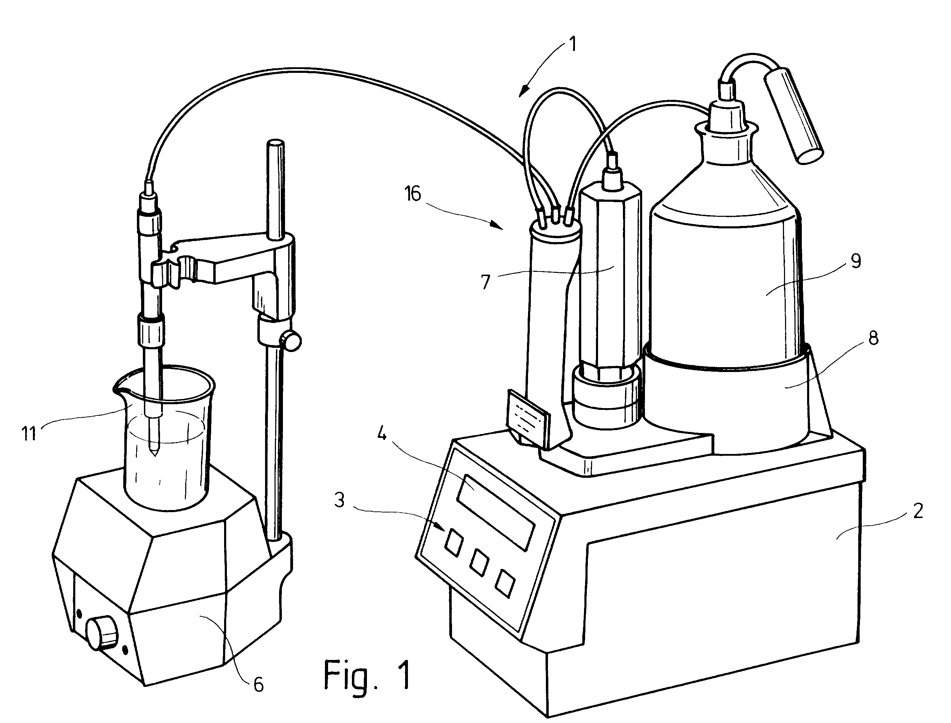

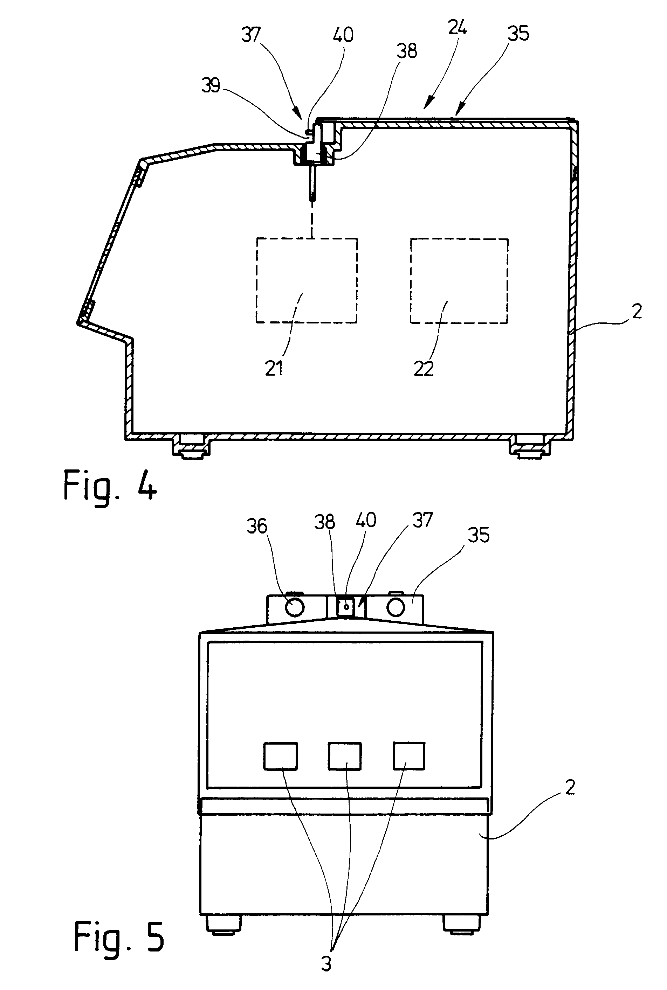

Gemäß Fig. 1, die lediglich der Erläuterung dient und nicht von den Ansprüchen umfaßt wird, weist die Titriervorrichtung 1 ein Grundgerät 2 auf, das mit Bedienelementen 3 und Anzeigeelementen 4 (Display) versehen ist. Über eine externe, nicht dargestellte Tastatur ist ebenfalls eine Bedienung möglich. Im Inneren des Grundgeräts 2 befindet sich u. a. eine Steuereinrichtung 22 und eine Betätigungseinrichtung 21, die der volumetrischen Zumessung eines Reagenzes zum Zwecke der Bestimmung einer chemischen Substanz dienen. In Figur 5 sind die Steuereinrichtung 22 und die Betätigungseinrichtung 21 schematisch angedeutet.

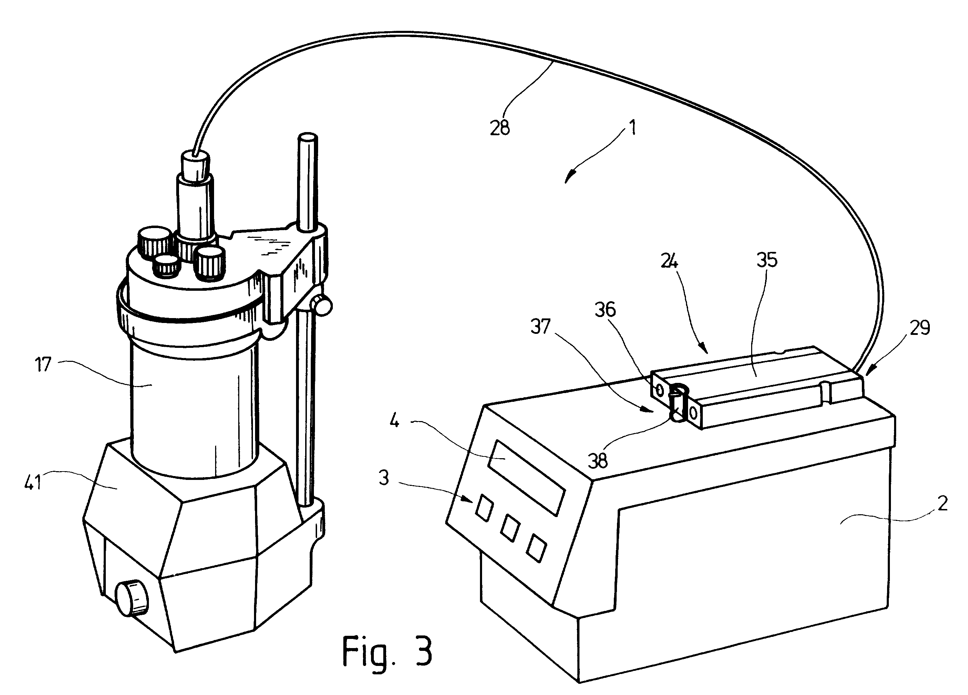

Auf dem Grundgerät 2 ist eine Wechseleinheit, die als eine volumetrische Dosiereinheit 16 ausgebildet ist, lösbar befestigt. Das Befestigen kann vorzugsweise dadurch erfolgen, daß die volumetrische Dosiereinheit 16 auf die Oberseite des Grundgerätes 2 aufgesetzt wird. Zur Führung weist die Oberseite des Grundgeräts 2 einen eine Aufnahme 24 bildenden Sockel 35 auf, auf den die Dosiereinheit 16 mit einer entsprechenden Aussparung von vorn nach hinten aufgeschoben und dort verrastet wird. Mittels einer Schnittstelleneinrichtung, die sich auf der Oberseite des Grundgerätes 2 befindet, werden Informationen von der volumetrischen Dosiereinheit 16 abgefragt. Die Dosiereinheit 16 weist hierzu an ihrer Unterseite die notwendigen Kennzeichnungselemente auf. Diese können aus Kodierungsmagneten bestehen, die das maximale Dosiervolumen an das Grundgerät 2 melden (z.B. 5 ml, 20 ml, 50 ml). Weiterhin kann als Kennzeichnungselement ein Schalter vorgesehen sein, der sich in einer Rastvertiefung 36 am Sockel 35 befindet. Ferner erfolgt eine mechanische Kupplung einer der Reagenz-Zumessung dienenden Kolben/Zylinder-Einheit 7 der volumetrischen Dosiereinheit 16 mit der sich im Inneren des Grundgerätes 2 befindlichen Betätigungseinrichtung 21. Diese ist als Kolbenantrieb ausgebildet, der über eine Gewindespindel den Kolben der Kolben/Zylinder-Einheit 7 antreibt. Der Kolbenantrieb wird von Steuerimpulsen der Steuereinrichtung 22 angesteuert. Für die Verbindung des Kolbenantriebs mit dem Kolben sind geeignete mechanische Kupplungselemente 37 vorgesehen, die beim Aufsetzen der Dosiereinheit 16 auf das Grundgerät 2 selbsttätig kuppeln. Wie aus den Figuren 3, 4 und 5 ersichtlich, besteht das dem Grundgerät 2 angehörende Kupplungselement 37 aus einem Antriebswellenende 38, das von der Betätigungseinrichtung 21 angetrieben wird und mittels einer Ausnehmung 39 auf den halben Durchmesser abgestuft ist. Dort befindet sich ein Querstift 40. Die Dosiereinheit 16 weist ein entsprechendes Gegenstück auf, das mit einem Loch zur Aufnahme des Querstiftes 40 versehen ist.

Die volumetrische Dosiereinheit 16 weist ferner eine Aufnahme 8 für ein das entsprechende Reagenz beinhaltendes Behältnis 9 auf.

Neben dem Grundgerät 2 befindet sich eine Rührvorrichtung, die als separater Rührer 6 ausgebildet ist. Über eine gemeinsame Bodenplatte können Rührer 6 und Grundgerät 2 -nach einem nicht dargestellten Ausführungsbeispiel- auch miteinander verbunden sein. Auf dem Rührer 6 wird ein die zu untersuchende Probe aufnehmendes Titriergefäß 11 abgestellt. Das Reagenz wird über eine geeignete Schlauchleitung zugeführt. Im Innern des Titriergefäßes 11 befindet sich ein magnetisches Rührelement, daß vom Rührer 6 durch magnetische Kupplung antreibbar ist.

Vorzugsweise können dem Grundgerät 2 nacheinander verschiedene volumetrische Dosiereinheiten zugeordnet werden, die sich in der Zumeßmenge der Reagenzien und/oder in der Art des in die Aufnahme 8 eingesetzten Reagenzbehältnisses unterscheiden. Je nach Einsatzgebiet ist die gewünschte volumetrische Dosiereinheit 16 aus einem Wechseleinheitensatz auszuwählen und am Grundgerät 2 zu befestigen.

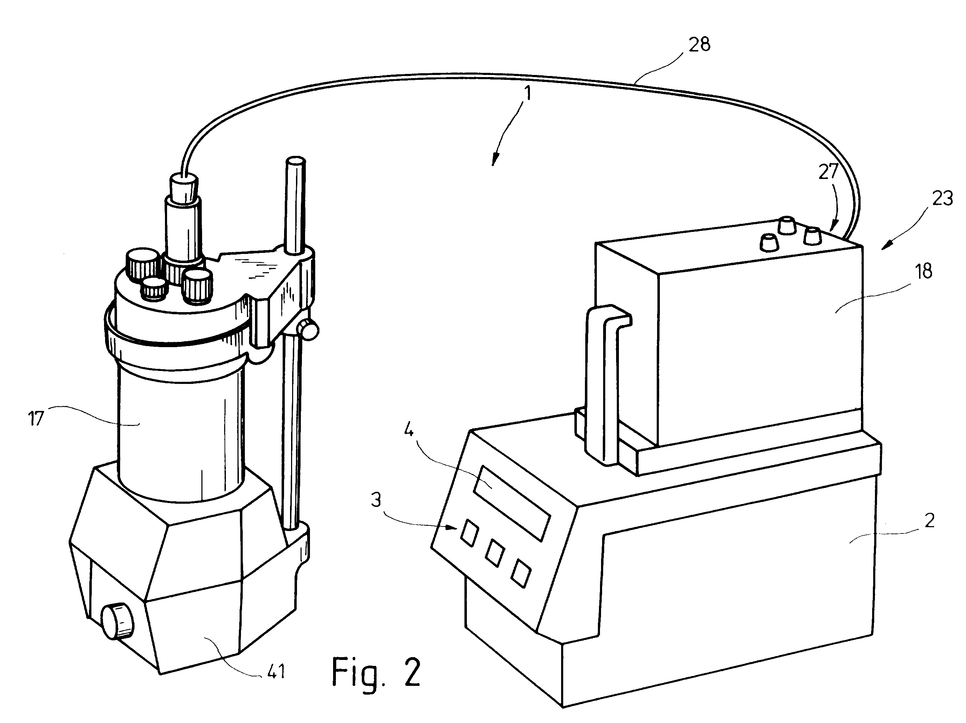

Fig. 2, die ebenfalls lediglich der Erläuterung dient und nicht von den Ansprüchen umfaßt wird, zeigt das gleiche Grundgerät 2, das -gemäß Fig. 1- für die volumetrische Bestimmungsmethode geeignet ist. Im Gegensatz zur Fig. 1 ist jedoch anstelle der volumetrischen Dosiereinheit 16, eine coulometrische Adaptereinheit 18 auf dem Grundgerät 2 lösbar befestigt. Diese Adaptereinheit 18 ist ebenfalls als Wechseleinheit 23 ausgebildet. Die coulometrische Dosiereinheit 18 weist eine Schnittstelle 27 auf, von der elektrische Verbindungen 28 zu sich innerhalb einer Titrierzelle 17 befindlichen Generator-Elektroden führen. Beim Aufsetzen und Verrasten der coulometrischen Adaptereinheit 18 auf dem Grundgerät 2 werden über geeignete Schnittstellenelemente (Anschlüsse - Gegenanschlüsse) die erforderlichen Verbindungswege selbsttätig hergestellt. Zusätzlich können elektrische Verbindungen über ein an der Rückseiten des Grundgeräts 2 sowie der coulometrischen Adaptereinheit 18 mittels Steckanschlüsse anschließbares Kabel hergestellt werden. Die Steuereinrichtung 22, die -im Ausführungsbeispiel der Fig. 1- den Antrieb der Kolben/Zylinder-Einheit 7 ansteuerte, dient beim Ausführungsbeispiel der Fig. 2 ebenfalls der Reagenzzumessung, indem sie einem im Inneren der Adaptereinheit 18 befindlichen Stromgenerator ihre Steuerimpulse zuführt, die zur Stromabgabe des Stromgenerators führt. Dieser Strom wird den Elektroden der Titrierzelle 17 zugeführt, die sich auf einem Rührer 41 befindet.

Die Fig. 3 zeigt nun ein Ausführungsbeispiel der erfindungsgemäßen Titriervorrichtung 1, der Klarheit halber aber ohne volumetrische Dosiereinheit 16. Im Unterschied zu dem in Fig. 1 und Fig. 2 gezeigten Grundgerät 2 ist hier die für die Coulometrie erforderliche Einrichtung im Grundgerät 2 enthalten. So befindet sich beispielsweise der für die Erzeugung der Stromimpulse erforderliche Stromgenerator im Innern des Grundgerätes 2. Er wird von der Steuereinrichtung 22 -die sich ebenfalls im Grundgerät 2 befindet- angesteuert. Über eine Schnittstellenvorrichtung 29 -vorzugsweise an der Rückseite des Grundgerätes 2- werden mittels geeigneter Verbindungen 28 der Anschluß (u. a. der Generator-Elektroden) zur coulometrischen Titrierzelle 17 hergestellt, die sich auf einem separaten Rührer 41 befindet. Bei dem Grundgerät 2 des Ausführungsbeispiels der Fig. 3 handelt es sich -mit Ausnahme der für die Coulometrie integrierten Einrichtungen- um dasselbe, was bereits in der Fig. 1 beschrieben wurde. Dies bedeutet, daß auf der Oberseite auch eine volumetrische Dosiereinheit 16 aufsetzbar ist, so daß gleichzeitig oder nacheinander sowohl eine coulometrische Messung als auch eine volumetrische Messung möglich ist. Auf der Oberseite des Grundgeräts 2 befindet sich dafür das entsprechende Kupplungselement 37 für die Kolben/Zylinder-Einheit.

Sowohl für den abwechselnden wie gleichzeitigen Betrieb der volumetrischen und coulometrischen Anordnung ist vorgesehen, die kompletten Titrierzellen inklusive Rührer, Elektroden und aller Steckverbindungen gleichzeitig zur Verfügung zu stellen. Damit werden Umbau- beziehungsweise Umsteckarbeiten beim Wechsel der Dosierart vermieden. Darüber hinaus ist es möglich, daß beide Dosierarten in einer gemeinsamen Zelle abwechselnd betrieben werden.

Abschließend sei darauf hingewiesen, daß die Beschreibung und die Figuren nur auf die für die Erfindung notwendigen Elemente eingeht: Weitere technische Einrichtungen, die für die Titration notwendig, jedoch für die Beschreibung der Erfindung nicht wesentlich sind, wurden -der Übersichtlichkeit halber- weggelassen.

## Patentansprüche

1. Volumetrisch und coulometrisch arbeitende Titriervorrichtung aus einem Grundgerät (2), das in seinem Gehäuse sowohl eine Steuereinrichtung (22) für die volumetrische und die coulometrische Reagenz-Zumessung als auch eine mechanische Betätigungseinrichtung (21) ausschließlich für die volumetrische Reagenz-Zumessung aufweist, und einer volumetrischen Dosiereinrichtung (16), die am Grundgerät (2) abnehmbar befestigt ist und mechanische Kupplungselemente (37) zum Anschluß an die Betätigungseinrichtung aufweist, wobei die Titriervorrichtung zusätzlich eine coulometrische Titrierzelle (17) umfaßt, die direkt oder mittels einer Adaptereinheit (18) unter Verwendung derselben Steuereinrichtung (22) ebenfalls am Grundgerät (2) abnehmbar befestigt ist.

2. Titriervorrichtung nach Anspruch 1, **dadurch gekennzeichnet**, daß die coulometrische Adaptereinheit (18) als Wechseleinheit (23) ausgebildet ist, deren Einrichtungen über lösbare Verbindungsleitungen an dem Grundgerät (2) angeschlossen sind.

3. Titriervorrichtung nach einem der vorhergehenden Ansprüche, **dadurch gekennzeichnet**, daß die coulometrische Adaptereinheit (18) und die volumetrische Dosiereinheit (16) jeweils als Wechseleinheit ausgebildet sind, und daß das Grundgerät (2) eine Aufnahme (24) für die volumetrische Dosiereinheit (16) aufweist.

4. Titriervorrichtung nach einem der vorhergehenden Ansprüche, **dadurch gekennzeichnet**, daß das Grundgerät (2) Anschlüsse für mechanische und/oder elektrische Verbindungswege aufweist, die beim Zuordnen der volumetrischen Dosiereinheit (16) und/oder der coulometrischen Adaptereinheit (18) vorzugsweise selbsttätig mit Gegenanschlüssen der entsprechenden Dosier-/Adaptereinheit(en) (16, 18) verbunden werden.

5. Titriervorrichtung nach einem der vorhergehenden Ansprüche, **dadurch gekennzeichnet**, daß die Steuereinrichtung (22) der Titration dienende elektrische Steuerimpulse für die Reagenz-Zumessung erzeugt, und daß diese Steuerimpulse sowohl der Ansteuerung der Betätigungseinrichtung (21) für die volumetrische Dosiereinheit (16) als auch der Ansteuerung der coulometrischen Titriereinheit (10), dienen.

6. Titriervorrichtung nach Anspruch 5, **dadurch gekennzeichnet**, daß die Steuerimpulse einen Stromgenerator der coulometrischen Adaptereinheit (18) ansteuern, und daß die coulometrische Adaptereinheit (18) eine Schnittstelleneinrichtung (27) zum Anschluß von elektrischen Verbindungen (28) zur coulometrischen Titrierzelle (17) aufweist.

7. Titriervorrichtung nach Anspruch 5, **dadurch gekennzeichnet**, daß der Stromgenerator für die coulometrische Titriereinheit im Grundgerät (2) angeordnet ist, und daß das Grundgerät (2) eine Schnittstellenvorrichtung (29) zum Anschluß der elektrischen Verbindungen (28) zur coulometrischen Titrierzelle (17) aufweist, so daß diese direkt ohne Verwendung eines Adapters am Grundgerät abnehmbar befestigt ist.

8. Titriervorrichtung nach einem der vorhergehenden Ansprüche, **dadurch gekennzeichnet**, daß die volumetrische Dosiereinheit (16) für die Reagenz-Dosierung eine Kolben/Zylinder-Einheit (7) aufweist, deren im Grundgerät (2) angeordneter, kuppelbarer Kolbenantrieb von den Steuerimpulsen angesteuert wird.

9. Titriervorrichtung nach einem der vorhergehenden Ansprüche, **dadurch gekennzeichnet**, daß die coulometrische Adaptereinheit als gegenüber dem Grundgerät separate Einheit ausgebildet ist.

10. Titriervorrichtung nach einem der vohergehenden Ansprüche, **dadurch gekennzeichnet**, daß die coulometrische Adaptereinheit in einem, dem Grundgerät beigestellten Rührer (6, 41) integriert ist.

## Claims

1. A volumetrically and coulometrically operating titrating apparatus composed of a basic unit (2) - whose housing has both a control device (22) for volumetric and coulometric reagent metering and a mechanical actuating device (21) solely for volumetric reagent metering - and of a volumetric dosing device (16) which is detachably secured to the basic unit (2) and has mechanical coupling members (37) for connection to the actuating device, the titrating apparatus additionally comprising a coulometric titrating chamber (17) which is likewise detachably secured to the basic unit (2), either directly or by means of an adaptor unit (18), and uses the same control device (22).

2. A titrating apparatus in accordance with Claim 1, characterised in that the coulometric adaptor unit (18) is in the form of an interchangeable unit (23) whose devices are connected to the basic unit (2) via detachable connecting lines.

3. A titrating apparatus in accordance with any one of the preceding Claims, characterised in that the coulometric adaptor unit (18) and the volumetric dosing unit (16) are both exchangeable units, and in that the basic unit (2) has a seat (24) for the volumetric dosing unit (16).

4. A titrating apparatus in accordance with any one of the preceding Claims, characterised in that the basic unit (2) has connections for mechanical and/or electrical connection paths, upon association of the volumetric dosing unit (16) and/or the coulometric adaptor unit (18) these connections being connected, preferably automatically, to mating connections of the corresponding dosing/adaptor unit(s) (16, 18).

5. A titrating apparatus in accordance with any one of the preceding Claims, characterised in that the control device (22) produces titration-serving electrical control pulses for reagent metering, and in that these control pulses are used both to trigger the actuating device (21) for the volumetric dosing unit (16) and to trigger the coulometric titrating unit (10).

6. A titrating apparatus in accordance with Claim 5, characterised in that the control pulses trigger a current generator of the coulometric adaptor unit (18), and in that the coulometric adaptor unit (18) has an interface device (27) for the connection of electrical connections (28) to the coulometric titrating chamber (17).

7. A titrating apparatus in accordance with Claim 5, characterised in that the current generator for the coulometric titrating unit is arranged in the basic unit (2), and in that the basic unit (2) has an interface device (29) for the connection of the electrical connections (28) to the coulometric titrating chamber (17), so that the latter is directly detachably secured to the basic unit without use being made of an adaptor.

8. A titrating apparatus in accordance with any one of the preceding Claims, characterised in that the volumetric dosing unit (16) for reagent dosing has a piston/cylinder unit (7) whose coupleable piston drive arranged in the basic unit (2) is triggered by the control pulses.

9. A titrating apparatus in accordance with any one of the preceding Claims, characterised in that the coulometric adaptor unit is a separate unit with respect to the basic unit.

10. A titrating apparatus in accordance with any one of the preceding Claims, characterised in that the coulometric adaptor unit is integrated in an agitator (6, 41) placed beside the basic unit.

## Revendications

1. Dispositif de titrage fonctionnant en mode volumétrique et en mode colorimétrique, comprenant,
- un appareil de base (2) contenant dans son boîtier à la fois un dispositif de commande (22) du dosage du réactif volumétrique et colorimétrique, ainsi qu'un dispositif mécanique de manoeuvre (21) intervenant exclusivement pour le dosage de réactif volumétrique,
- un appareil volumétrique de dosage (16), fixé de manière amovible sur l'appareil de base et équipé d'éléments mécaniques d'accouplement (37) permettant de le raccorder au dispositif de manoeuvre, le dispositif de titrage comprenant en plus une cellule de titrage volumétrique (17) qui est également fixée de manière amovible sur l'appareil de base (2), directement ou indirectement par l'intermédiaire d'un adaptateur (18) avec utilisation du même dispositif de commande (22).

2. Dispositif de titrage selon la revendication 1,
caractérisé en ce que
l'adaptateur colorimétrique (18) est une unité interchangeable (23) dont les dispositifs sont raccordés à l'appareil de base (2) par des conduites de liaison amovibles.

3. Dispositif selon une des revendications précédentes,
caractérisé en ce que
l'adaptateur (18) et l'unité de dosage volumétrique (16) sont l'un et l'autre des unités interchangeables, l'appareil de bas (2) présentant un logement (24) pour recevoir l'unité de dosage volumétrique (16).

4. Dispositif selon une des revendications précédentes,
caractérisé en ce que
l'appareil de base (2) est équipé de raccords pour accueillir des moyens de liaison mécaniques et/ou électriques qui, lorsqu'on associe l'unité de dosage volumétrique (16) et/ou l'adaptateur colorimétrique (18), se trouvent de préférence automatiquement raccordés aux contreparties des raccords correspondants de l'unité de dosage (16) et de l'adaptateur (18).

5. Dispositif selon une des revendications précédentes,
caractérisé en ce que
le dispositif de commande (22) émet des impulsions électriques servant à commander le dosage du réactif, ces impulsions assurant à la fois la commande du dispositif de manoeuvre (21) de l'unité de dosage volumétrique (16) et la commande de l'unité colorimétrique de titrage (10).

6. Dispositif selon une des revendications précédentes,
caractérisé en ce que
les impulsions de commande commandent un générateur de courant appartenant à l'adaptateur colorimétrique (18) qui est lui-même équipé d'un dispositif à interface (27) assurant le raccordement des liaisons électriques (28) à la cellule de titrage colorimétrique (17).

7. Dispositif selon la revendication 5,
caractérisé en ce que
le générateur de courant pour l'unité de titrage colorimétrique est monté dans l'appareil de base (2) qui est lui-même équipé d'un dispositif à interface (29) assurant le raccordement des liaisons électriques (28) à la cellule de titrage colorimétrique (17), de sorte que celle-ci est fixée de manière amovible sur l'appareil de base, directement sans intervention d'un adaptateur.

8. Dispositif selon une des revendications précédentes,
caractérisé en ce que
l'unité de dosage volumétrique (16)assurant le dosage du réactif colorimétrique comprend un ensemble cylindre/piston (7) dont le piston est commandé par un entraînement accouplable, monté dans l'appareil de base.

9. Dispositif selon une des revendications précédentes,
caractérisé en ce que
l'adaptateur colorimétrique est une unité distincte de l'appareil de base.

10. Dispositif selon une des revendications précédentes,
caractérisé en ce que
l'adaptateur colorimétrique est intégré à un agitateur (6, 11) mis à la disposition de l'appareil de base.
